(19) Europäisches Patentamt
European Patent Office
Office européen des brevets

(11) Veröffentlichungsnummer : **0 053 099**
**B1**

(12) # EUROPÄISCHE PATENTSCHRIFT

(45) Veröffentlichungstag der Patentschrift : **29.02.84**

(51) Int. Cl.³ : **A 01 N 47/30** // (A01N47/30, 43/68)

(21) Anmeldenummer : **81810459.8**

(22) Anmeldetag : **19.11.81**

(54) **Schädlingsbekämpfungsmittel.**

(30) Priorität : **25.11.80 CH 8706/80**

(43) Veröffentlichungstag der Anmeldung : **02.06.82 Patentblatt 82/22**

(45) Bekanntmachung des Hinweises auf die Patenterteilung : **29.02.84 Patentblatt 84/09**

(84) Benannte Vertragsstaaten : **AT BE CH DE FR IT LI NL**

(56) Entgegenhaltungen :
**CH-A- 448 606**
**FR-A- 2 362 134**
**JOURNAL OF MEDICINAL CHEMISTRY, Band 10, Nr. 3, Mai 1967, Seiten 457-461, American Chemical Society Washington D.C., U.S.A. A.B. BORKOVEC et al.: "Insect chemosterilants. V. Derivatives of melamine"**

(73) Patentinhaber : **CIBA-GEIGY AG**
**Patentabteilung Postfach**
**CH-4002 Basel (CH)**

(72) Erfinder : **Laanio, Verena**
**Schützenhausweg 7**
**CH-4411 Arisdorf (CH)**
Erfinder : **von Orelli, Marcus, Dr.**
**Akazienstrasse 6**
**CH-4142 Münchenstein (CH)**
Erfinder : **Häusermann, Walter, Dr.**
**Avenue de la Gare 24**
**CH-1870 Monthey (CH)**

EP 0 053 099 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Schädlingsbekämpfungsmittel

Die vorliegende Erfindung betrifft neue insektizide und akarizide Mittel, welche neben einem oder mehreren inerten Zusatzstoffen eine Wirkstoffkombination enthalten, und die Verwendung solcher Wirkstoffkombinationen oder sie enthaltender Mittel zur Bekämpfung von Insekten und Milben (Ordnung Acarina).

Die Bekämpfung von Schädlingen wirft in zunehmendem Masse grosse Probleme auf, wobei insbesondere die Umweltbelastung einerseits und die Resistenzbildung andererseits eine wesentliche Rolle spielen. Obwohl zahlreiche Schädlingsbekämpfungsmittel zur Verfügung stehen, sind dem Einsatz chemischer Substanzen durch die zunehmende Umweltbelastung Grenzen gesetzt. Ist jedoch — bedingt durch geringere Aufwandmengen — die Gewähr für die restlose Vernichtung einer Schädlingspopulation einschliesslich ihrer verschiedenen Entwicklungsstadien nicht mehr gegeben, so wird damit häufig einer Resistenzentwicklung Vorschub geleistet. Es kommt zum Aufbau von Schädlingspopulationen, welche mit den vorgängig eingesetzten Substanzen nur noch unzureichend oder überhaupt nicht mehr bekämpft werden können. Dabei kann Resistenz nicht nur gegenüber einzelnen Substanzen, sondern auch gegenüber Substanzklassen aufgebaut werden.

Es ist daher wünschenswert, bei der Schädlingsbekämpfung Mittel zu verwenden, welche bei tolerierbaren Aufwandmengen einer Resistenzbildung abträglich sind.

Es ist daher ein Ziel der vorliegenden Erfindung, Mittel zur Bekämpfung von Insekten und Milben (Ordnung Acarina), insbesondere parasitären und vor allem tierparasitären Milben, zur Verfügung zu stellen, mit denen bei ökologisch vertretbaren Aufwandmengen eine wirksame Bekämpfung der Schädlinge unter weitgehender Vermeidung von Resistenzbildung erzielt wird.

Die erfindungsgemässen Mittel sind dadurch gekennzeichnet, dass die Wirkstoffkombination, welche sie enthalten, aus einer Verbindung der Formel I

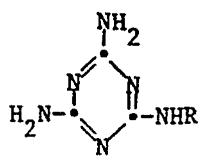

(I)

in welcher R eine Cyclopropyl- oder Isopropylgruppe bedeutet, und N-(2-Methyl-4-chlorphenyl)-N',N'-dimethylthioharnstoff der Formel II

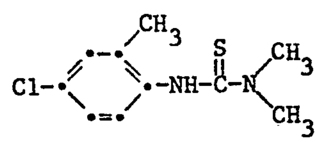

(II)

besteht.

Die einzelnen Wirkstoffkomponenten, aus denen die Wirkstoffkombinationen zusammengesetzt sind, sind als Pestizide bekannt und lassen sich nach bekannten Methoden herstellen.

Die Verbindung der Formel I, in welcher R für eine Cyclopropylgruppe steht, ist beschrieben in der BE-PS 857.896 ; die Verbindung der Formel I, in welcher R für eine Isopropylgruppe steht, ist bekannt aus J. Med. Chem. *10* (1967), 457 ; die Verbindung der Formel II ist beschrieben in der CH-PS 448.606 und bekannt unter der Bezeichnung Dipofen.

Es wurde nun gefunden, dass die in den erfindungsgemässen Mitteln vorliegenden Wirkstoffkombinationen überraschenderweise eine synergistische Wirkung aufweisen, d. h., dass sie die additive Wirkung der Einzelkomponenten in signifikantem Ausmass übertreffen.

Für die in den erfindungsgemässen Wirkstoffkombinationen massgebenden Gewichtsverhältnisse einer Verbindung der Formel I zu der Verbindung der Formel II gilt der Bereich von 1 : 100 bis 100 : 1. Für die Entfaltung der synergistischen Wirkung ist das Kombinationsverhältnis im Bereich von 1 : 10 bis 10 : 1 als besonders bevorzugt wirksam anzusehen.

Die den erfindungsgemässen Mitteln zugrundeliegende Erfindung wird anhand des folgenden Beispiels erläutert. Zu diesem Zweck wird die Bestimmung des synergistischen Effektes analog der Methode von Y. P. Sun und E. R. Johnson [J. Econ. Entomol. *53*, 887 (1960)] zur Bestimmung der bioziden Wirksamkeit von Substanzgemischen auf bestimmte Species durchgeführt. Danach wird die synergistische Wirkung der kombinierten Wirkstoffe durch den Vergleich der Dosis-Wirkungs-Kurven der Kombinationen und ihrer Einzelkomponenten mit Hilfe der Cotoxizitätsindices bestimmt und wie folgt berechnet :

$$\text{Cotoxizitätsindex CI} = IR_{50}\ \text{Theorie}/IR_{50}\ \text{Test},$$

worin $IR_{50}$ die Konzentration der Wirkstoffe bzw. der Wirkstoffkombinationen in µg/ml, bei welcher bei 50 % der Testorganismen keine Reproduktion stattfindet, bedeutet.

Der von einer Wirkstoffkombination erwartete theoretische $IR_{50}$-Wert beruht auf der Annahme einer additiven Wirkung der beiden Einzelkomponenten und wird nach der Formel für das harmonische Mittel berechnet:

$$IR_{50}\ \text{Theorie} = 1/(a/IR_{50}A) + (b/IR_{50}B),$$

worin a den Gewichtsanteil der Substanz A und b den Gewichtsanteil der Substanz B am Gesamtgewicht der Kombination A + B bedeuten.

Wirkstoffkombinationen mit synergistischer, d. h. mehr als additiver Wirkung der beiden Einzelkomponenten ergeben Cotoxizitätsindices mit Werten von > 1.

Beispiel 1

Vollgesogene Zecken (Boophilus microplus ♀♀) des organophosphor-resistenten Stammes Biarra wurden in Gruppen von je 40 Exemplaren in Petrischalen von 9 cm Durchmesser dorsal fixiert und mit frisch zubereiteten Lösungen oder Suspensionen der Wirkstoffe und der Wirkstoffkombinationen in Standard-WHO-Wasser behandelt. Dabei wurde soviel Flüssigkeit in die Schale gegossen, dass die Zecken vollständig untergetaucht waren. Nach 1-stündigem Bad wurden die Flüssigkeiten abgegossen und zurückgebliebene Tropfen durch Abschütteln entfernt. Danach wurden die Petrischalen mit den darin befindlichen Zecken über Nacht bei Raumtemperatur getrocknet und anschliessend bis zur Eiablage und Schlüpfen der Larven im Insektarium bei 28 °C und 80 % relativer Luftfeuchtigkeit 4 Wochen lang aufbewahrt.

Für die nachfolgende Evaluierung der Wirksamkeit der geprüften Substanzen oder Substanzgemische wurden folgende Kriterien gewertet: Mortalität und Sterilität der behandelten weiblichen Zecken sowie die Larven-Schlupfunfähigkeit der abgelegten Eier. Diese Wirkungen wurden für die Auswertung als « Inhibition of Reproduction » (IR) erfasst.

Für jeden Wirkstoff bzw. jede Wirkstoffkombination wurde eine Verdünnungsreihe mit verschiedenen Konzentrationen geprüft und nach der Methode von Berkson (J. Am. Stat. Assoc. *48*, 565, 1953) die entsprechenden Dosis-Wirkungs-Kurven berechnet und die $IR_{50}$-Werte bestimmt.

Aus den erhaltenen Werten für $IR_{50}$ Test und $IR_{50}$ Theorie wurden dann die Cotoxizitätsindices ermittelt (Tabelle 1). Es wurden Kombinationen der Wirkstoffe der Formeln I und II geprüft.

Kombinationskomponenten

A = Verbindung der Formel II

B =

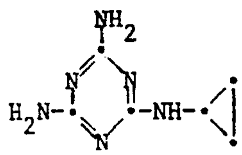

C=

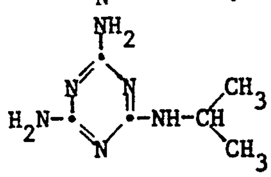

Tabelle 1

| Verbindung bzw. Verbindungsgemisch | Gewichtsverhältnis des Gemisches | $IR_{50}$ Test µg/ml | $IR_{50}$ Theorie µg/ml | Cotox. Index |
|---|---|---|---|---|
| A | - | 100 | - | - |
| B | - | ≥15000 | - | - |
| A:B | 1:9 | 264,1 | 943,4 | 3,57 |
| A:B | 1:1 | 93,9 | 198,7 | 2,12 |
| A:B | 9:1 | 25,0 | 111,0 | 4,44 |
| A | - | 100 | - | - |
| C | - | ≥15000 | - | - |
| A:C | 1:1 | 86,7 | 198,7 | 2,29 |
| A:C | 9:1 | 36,6 | 111,0 | 3,03 |

Zur Bekämpfung von Insekten und Milben (Ordnung Acarina) können die Wirkstoffkombinationen als solche oder in Form von Mitteln, welche neben einer Wirkstoffkombination einen oder mehrere inerte Zusatzstoffe enthalten, eingesetzt werden.

Als inerte Zusatzstoffe kommen feste und flüssige, natürliche oder regenerierte, in der Formulierungstechnik übliche Stoffe in Betracht, wie beispielsweise Lösungs-, Dispergier-, Netz-, Haft-, Verdickungs- oder Bindemittel.

Die Wirkstoffkombinationen lassen sich zu Formulierungen wie Stäubemitteln, Emulsionskonzentraten, Granulaten, Dispersionen, Sprühmitteln, Lösungen oder Aufschlämmungen verarbeiten. Ferner können flüssige, insbesondere wässrige Zubereitungen oder Konzentrate der Wirkstoffkombinationen für Viehbäder (« plunge dips »), Sprühgänge (« spray races »), Aufgüsse (« pour on ») und manuelle Applikationsmethoden zum Besprühen oder Auftragen (« handspray, handdressing ») verwendet werden.

Die Herstellung erfindungsgemässer Mittel erfolgt zweckmässigerweise durch inniges Vermischen und/oder Vermahlen der Wirkstoffkombinationen mit geeigneten Zusatzstoffen, gegebenenfalls unter Zusatz von gegenüber den Wirkstoffen inerten Dispergier- oder Lösungsmitteln. Die Wirkstoffkombinationen können beispielsweise in den folgenden Aufarbeitungsformen vorliegen und angewendet werden :

Feste Aufarbeitungsformen : Stäubemittel, Streumittel, Granulate :

Flüssige Aufarbeitungsformen :

a) Lösungen ;

b) in Wasser dispergierbare Konzentrate der Wirkstoffkombinationen : Spritzpulver (wettable powder), Pasten, Emulsionen.

Die erfindungsgemässen Mittel enthalten die Wirkstoffkombination zweckmässigerweise in einem Anteil von 2 bis 80, vorzugsweise von 5 bis 50 Gew.-%.

Beispiel 2

Spritzpulver

5 bis 50 Gew.-Teile Wirkstoffkombination werden in einer Mischapparatur mit
5 Gew.-Teilen eines aufsaugenden Trägermaterials (Kieselsäure K-320 oder Wessalon S) und
35 bis 80 Gew.-Teilen eines Trägermaterials (Bobus alba oder Kaolin B 24) und einem Dispergiermittelgemisch, bestehend aus
5 Gew.-Teilen eines Na-lauryl-sulfonates und
5 Gew.-Teilen eines Alkyl-aryl-polyglykoläthers, intensiv vermischt. Diese Mischung wird auf einer Stift- oder Luftstrahlmühle bis auf 5-15 µm gemahlen. Das so erhaltene Spritzpulver gibt in Wasser eine gute Suspension.

Beispiel 3

Stäubemittel

5 Gew.-Teile feingemahlene Wirkstoffkombination werden mit
3 Gew.-Teilen einer gefällten Kieselsäure und
92 Gew.-Teilen Talk intensiv gemischt.

Die Wirkstoffkombinationen und die erfindungsgemässen Mittel, welche diese enthalten, zeigen eine ausgeprägte Wirksamkeit gegen Insekten und Milben (Ordnung Acarina), insbesondere deren tierparasitäre Formen. Sie wirken insbesondere gegen Zecken sowie gegen Insekten der Ordnung Diptera, wobei hier vor allem die ausgezeichnete Wirkung gegen Dipteren, welche zur Familie Calliphoridae gehören, zu erwähnen ist. Es sind insbesondere die Larven dieser Insekten, welche grosse Schäden in der Nutzviehhaltung verursachen können un deren Bekämpfung daher von besonders grosser Bedeutung ist. Ganz besondere Erwähnung verdient die hohe Effizienz der Wirkstoffkombinationen und der sie enthaltenden Mittel bei der Bekämpfung von Vertretern der zur Familie Calliphoridae gehörenden Gattung Lucilia, vor allem der Spezies Lucilia sericata (blowfly).

**Ansprüche**

1. Insektizides und akarizides Mittel, welches neben einem oder mehreren inerten Zusatzstoffen eine Wirkstoffkombination enthält, dadurch gekennzeichnet, dass die Wirkstoffkombination aus einer Verbindung der Formel I

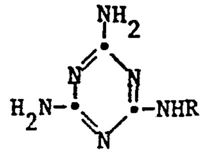

(I)

in welcher R eine Cyclopropyl- oder Isopropylgruppe bedeutet, und N-(2-Methyl-4-chlorphenyl)-N',N'-dimethylthioharnstoff der Formel II

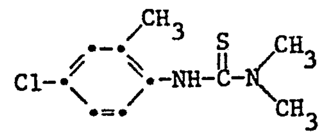

(II)

besteht.

2. Mittel nach Anspruch 1, dadurch gekennzeichnet, dass die Wirkstoffkombination ein Gewichtsverhältnis von einer Verbindung der Formel I zur Verbindung der Formel II von 100 : 1 bis 1 : 100 aufweist.

3. Mittel nach Anspruch 2, dadurch gekennzeichnet, dass die Wirkstoffkombination ein Gewichtsverhältnis von einer Verbindung der Formel I zur Verbindung der Formel II von 10 : 1 bis 1 : 10 aufweist.

4. Verwendung eines Mittels wie im Anspruch 1 beschrieben zur Bekämpfung von Insekten und zur Ordnung Acarina gehörenden parasitären Milben.

5. Verwendung einer Wirkstoffkombination wie im Anspruch 1 beschrieben zur Bekämpfung von Insekten und zur Ordnung Acarina gehörenden parasitären Milben.

6. Verwendung gemäss einem der Ansprüche 4 oder 5 zur Bekämpfung von Zecken.

7. Verwendung gemäss einem der Ansprüche 4 oder 5 zur Bekämpfung von Insekten.

8. Verwendung gemäss Anspruch 7 zur Bekämpfung von Insekten der Ordnung Diptera.

9. Verwendung gemäss Anspruch 8 zur Bekämpfung von Insekten der zur Ordnung Diptera gehörenden Familie Calliphoridae.

10. Verwendung gemäss Anspruch 9 zur Bekämpfung von Insekten der zur Familie Calliphoridae gehörenden Gattung Lucilia.

**Claims**

1. An insecticidal and acaricidal composition which contains an active ingredient combination consisting of a compound of the formula I

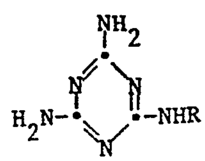

(I)

in which R is a cyclopropyl or an isopropyl group, and N-(2-methyl-4-chlorophenyl)-N',N'-dimethylthiourea of the formula II

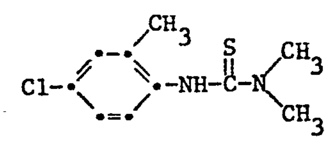

(II)

together with one or more inert adjuvants.

2. A composition according to claim 1, wherein the weight ratio of a compound of the formula I to a compound of the formula II in the active ingredient combination is from 100 : 1 to 1 : 100.

3. A composition according to claim 2, wherein the weight ratio of a compound of the formula I to the compound of the formula II in the active ingredient combination is from 10 : 1 to 1 : 10.

4. A method of controlling insects and parasitic mites belonging to the order Acarina, which comprises the use of a composition as described in claim 1.

5. A method of controlling insects and parasitic mites belonging to the order Acarina, which comprises the use of an active ingredient combination as described in claim 1.

6. A method according to either of claims 4 or 5 of controlling ticks.

7. A method according to either of claims 4 or 5 of controlling insects.

8. A method according to claim 7 of controlling insects of the order Diptera.

9. A method according to claim 8 of controlling insects of the family Calliphoridae belonging to the order Diptera.

10. A method according to claim 9 of controlling insects of the genus Lucilia belonging to the family of the Calliphoridae.

**Revendications**

1. Agents insecticides et acaricides qui contiennent, à côté d'un ou plusieurs produits d'addition inertes, une association de substances actives caractérisée par le fait que l'association de substances actives se compose d'un composé de formule I

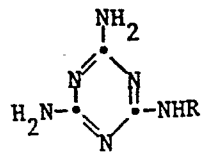

(I)

dans laquelle R représente un groupe cyclopropyle ou isopropyle, et de N-(2-méthyl-4-chlorophényl)-N', N'-diméthylthiourée de formule II

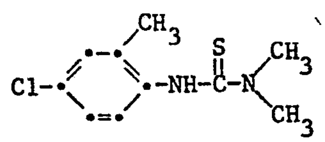

(II)

2. Agents suivant la revendication 1, caractérisés par le fait que l'association de substances actives présente un rapport de masses d'un composé de la formule I au composé de formule II de 100 : 1 à 1 : 100.

3. Agents suivant la revendication 2, caractérisés par le fait que l'association de susbtances actives présente un rapport de masse d'un composé de la formule I au composé de formule II de 10 : 1 à 1 : 10.

4. Utilisation d'un agent comme décrit dans la revendication 1 pour combattre les insectes et les acariens parasites appartenant à l'ordre Acarina.

5. Utilisation d'une association de substances actives comme décrit dans la revendication 1 pour combattre les insectes et les parasites acariens appartenant à l'ordre Acarina.

6. Utilisation suivant l'une des revendications 4 ou 5 pour combattre les tiques.

7. Utilisation suivant l'une des revendications 4 ou 5 pour combattre les insectes.

8. Utilisation suivant la revendication 7 pour combattre les insectes de l'ordre Diptera.

9. Utilisation suivant la revendication 8 pour combattre les insectes de la famille des calliphorides de l'ordre Diptera.

10. Utilisation suivant la revendication 9 pour combattre les insectes du genre Lucilia de la famille des Calliphorides.